# EUROPÄISCHE PATENTSCHRIFT

(11) **EP 0 873 564 B1**
(45) Veröffentlichungstag und Bekanntmachung des Hinweises auf die Patenterteilung: **06.10.1999**
(21) Anmeldenummer: 96944603.8
(22) Anmeldetag: 20.12.1996
(51) Int. Cl.: G21C 9/00, G21C 11/08, G21C 13/02

(54) **REAKTORDRUCKBEHÄLTER**
REACTOR PRESSURE VESSEL
CUVE DE REACTEUR

(30) Priorität: 08.01.1996 DE 19600402
(43) Veröffentlichungstag der Anmeldung: 28.10.1998
(73) Patentinhaber: SIEMENS AKTIENGESELLSCHAFT, 80333 München (DE)
(72) Erfinder: KOLEV, Nikolay, Ivanov, D-91074 Herzogenaurach (DE)
(86) Internationale Anmeldenummer: EP9605742
(87) Internationale Veröffentlichungsnummer: WO9725720

(56) Entgegenhaltungen:
- WO-A-95/14997
- DE-A- 3 628 855
- DE-A- 3 938 111
- US-A- 4 752 436
- US-A- 5 343 506

## Beschreibung

Die Erfindung betrifft einen Reaktordruckbehälter, welcher entlang einer Hauptachse gerichtet ist und zur Aufnahme eines Reaktorkerns eine metallische Hülle mit einer Innenwandung und einer Außenwandung aufweist.

In der DE 40 41 295 A1 ist eine Kernreaktoranlage mit einem einen Reaktorkern umschließenden Reaktordruckbehälter beschrieben. Der Reaktordruckbehälter ist in einer Reaktorgrube angeordnet, in welcher unterhalb des Reaktordruckbehälters ein tiegelförmiger Auffangbehälter vorgesehen ist. Dieser Auffangbehälter ist so ausgelegt, daß er in einem hypothetischen Störfallszenario mit unzureichender Kühlung des Reaktorkerns bei einem Versagen des Reaktordruckbehälters den abschmelzenden Reaktorkern aufnehmen und langfristig kühlen kann. Mit der in der DE 40 41 295 A1 beschriebenen Kernrückhaltevorrichtung mit einem tiegelförmigen Auffangbehälter ist nach Versagen des Reaktordruckbehälters ein sicherer Einschluß eines abschmelzendes Reaktorkerns in dem Sicherheitsbehälters der Kernkraftanlage, d.h. nach Durchschmelzen des Reaktordruckbehälters, gegeben.

Die DE 36 28 855 Al betrifft eine Leichtwasser-Kernkraftanlage mit einem metallischen Reaktordruckbehälter. Dieser ist von einer metallischen Sicherheitshülle umgeben, welche ihrerseits von einem Stahlbetonbehälter eingeschlossen ist. Der Reaktordruckbehälter ist in seinem Inneren am Boden und an den Seitenwänden zumindest bis zur Höhe der zu erwartenden Kernschmelze ausgekleidet. Diese Auskleidung besteht aus einem hitzebeständigen Material, beispielsweise aus keramischen Formsteinen. Die keramischen Formsteine können Bor- oder Bleiverbindungen mit dem Ziel einer Vedünnung der Kernschmelze aufweisen. Mit der Auskleidung soll ein Durchschmelzen des Reaktordruckbehälters hinausgezögert werden.

Aufgabe der Erfindung ist es, einen Reaktordruckbehälter anzugeben, welcher in einem Störfallszenario mit abschmelzenden Reaktorkern für einen möglichst langen Zeitraum integer bleibt.

Erfindungsgemäß wird die Aufgabe durch einen Reaktordruckbehälter gelöst, der zur Aufnahme eines Reaktorkerns eine metallische Hülle mit einer Innenwandung und einer Außenwandung aufweist, wobei an der Innenwandung eine gürtelförmig angeordnete Schutzschicht vorgesehen ist, die dem Schutz der Hülle gegen eine im Falle eines Abschmelzens des Reaktorkerns erzeugbare metallische Schmelze dient.

Durch eine solche Schutzschicht an der Innenwandung wird bei einem abschmelzenden Reaktorkern das Versagen des Reaktordruckbehälters deutlich hinausgezögert oder sogar vollständig verhindert. Ein Versagen des Reaktordruckbehälters kann durch die von dem abschmelzenden Reaktorkern erzeugte hohe Temperatur von deutlich über 1000 °C und/oder durch eine dünne metallische Schmelze hervorgerufen werden, die sich auf dem im geodätisch tiefstliegenden Teil des Reaktordruckbehälters sammelnden abgeschmolzenen Reaktorkern ausbildet. Diese Schmelze wird verursacht durch in dem Reaktordruckbehälter aufschmelzende metallische Komponenten. Sie kann gegenüber dem oxidischen abgeschmolzenen Reaktorkern eine deutlich geringere Schichtdicke aufweisen. Infolge einer entstehenden Fokussierung der thermischen Energie in der metallischen Schicht wirkt auf die Hülle des Reaktordruckbehälters im Bereich dieser metallischen Schmelze lokal eine höhere thermische Belastungen ein, so daß dieser im Bereich der metallischen Schmelze versagen könnte. Da zudem über den abgeschmolzenen Reaktorkern ggf. mehr thermische Energie der metallischen Schmelze zugeführt wird als diese durch Strahlung abgibt, kann unter Umständen eine ständige Aufheizung der metallischen Schmelze stattfinden. Eine Schutzschicht zwischen der dünnen metallischen Schmelze und der Hülle, die diese thermisch voneinander isoliert, zögert ein Durchschmelzen des Reaktordruckbehälters wirksam heraus oder verhindert das Durchschmelzen sogar vollständig, insbesondere bei einer Außenkühlung des Reaktordruckbehälters. Eine Außenkühlung ist wirksam in dem geodätisch unterhalb der gürtelförmigen Auskleidung liegenden Bereich der Hülle durchführbar, welcher den abschmelzenden Reaktorkern aufnimmt und keine Innenauskleidung aufweist. In Folge einer Kühlung an der Außenwandung des Reaktordruckbehälters kann eine Krustenbildung des abgeschmolzenen Reaktorkerns an der Innenwandung stattfinden, so daß ein Selbsteinschluß des abgeschmolzenen Reaktorkerns erreichbar ist. Bei der insbesondere dünnen metallischen Schicht ist eine Krustenbildung unwahrscheinlich, wobei durch die Außenkühlung allerdings auch eine effektive Wärmeabfuhr sichergestellt ist.

Vorzugsweise ist die thermische Schutzschicht daher gürtelförmig an der Innenwandung in einer Höhe angeordnet, so daß im Falle eines Abschmelzens des Reaktorkerns die sich auf dem abgeschmolzenen Reaktorkern ausbildende metallische Schmelze von der Schutzschicht ummantelt ist. Hierdurch wird erreicht, daß in dem höchst unwahrscheinlichen Störfallszenario eines abschmelzenden Reaktorkerns ein direkter Kontakt der Schicht aus einer metallischen Schmelze mit der Hülle des Reaktordruckbehälters verhindert ist. Ein frühzeitiges Versagen des Reaktordruckbehälters im Bereich der Schicht der metallischen Schmelze ist somit verhindert und somit das Versagen des Reaktordruckbehälters hinausgezögert, wenn nicht sogar vollständig verhindert.

Der Reaktordruckbehälter kann sowohl von außen an der Außenwandung als auch von innen, beispielsweise über vorhandene Not- und Einspeisesysteme mittels Kühlwasser, kühlbar ausgebildet sein. Hierdurch ist die Erhaltung der Integrität des Reaktordruckbehälters selbst bei einem Störfallszenario mit abschmelzenden Reaktorkern gegeben.

Die Schutzschicht ist vorzugsweise demontierbar an der Innenwandung befestigt, wodurch bei routinemäßigen Sicherheitskontrollen des Reaktordruckbehälters, beispielsweise Festigkeitsprüfungen oder Rißprüfungen, die Prüfbarkeit des Reaktordruckbehältes gewährleistet bleibt. Die Schutzschicht kann ähnlich eines thermischen Schutzschildes in der Brennkammer einer thermischen Verbrennungsmaschine, wie einer Gasturbine, ausgeführt sein. Eine Befestigung und Anordnung der Schutzschicht erfolgt unter Berücksichtigung der gewünschten Strömungsverhältnisse des Kühlmediums innerhalb des Reaktordruckbehälters. Die Schutzschicht ist vorzugsweise so an der Innenwandung angebracht, daß während eines normalen Betriebes des Reaktordruckbehälters eine ungehinderte Strömung des Kühlmediums des Reaktorkerns gewährleistet bleibt.

Vorzugsweise weist die Schutzschicht ein thermisch isolierendes hochschmelzendes Material, insbesondere eine Keramik auf, die den hohen Temperaturen bei einem abschmelzenden Reaktorkern über einen hinreichend langen Zeitraum standhält. Als Material für die thermische Schutzschicht eignet sich insbesondere ein Metalloxid, wie Urandioxid oder Zirkondioxid mit einem entsprechend hohen Schmelzpunkt. Zur Reduzierung des Strömungswiderstandes einer aus einer Keramik gebildeten thermischen Schutzschicht kann diese an ihrer Oberfläche mit einer glatten Schicht aus Metall überzogen oder in einem metallischen Behälter eingeschlossen sein.

Die thermische Schutzschicht kann somit eine gesinterte Keramik aufweisen, welche insbesondere in einem Metallbehältnis auf einfache Art und Weise ohne wesentliche Beeinträchtigung der Strömungsverhältnisse in dem Reaktordruckbehälter an der Innenwand anordenbar ist.

Die thermische Schutzschicht weist vorzugsweise eine Mehrzahl von Elementen, insbesondere von Keramiksteinen oder Keramiksegmenten auf. Durch einen Aufbau der Schutzschicht mit mehreren Elementen, von denen insbesondere jedes einzeln demontierbar ist, ist sie besonders einfach aufbaubar und kann im Zuge von regulären Kontrollarbeiten an dem Reaktordruckbehälter kontrolliert sowie gegebenenfalls repariert werden.

Der Reaktordruckbehälter ist vorzugsweise mit einem Kühlsystem zur Kühlung der Außenwandung der Hülle verbindbar. Dieses Kühlsystem kann Kühlrohre oder ähnliches an der Außenwandung des Reaktordruckbehälters umfassen sowie auch einen ausreichenden Vorrat an Kühlfluid zur Flutung einer den Reaktordruckbehälter umschließenden Reaktorgrube beinhalten. Durch eine Außenkühlung des Reaktordruckbehälters bei einem Störfallszenario mit abschmelzendem Reaktorkern ist eine Kühlung des abschmelzenden Reaktorkerns bereits im Inneren des Reaktordruckbehälters erreichbar. Hierdurch wird ein Versagen des Reaktordruckbehälters deutlich verzögert, wenn nicht sogar vollständig verhindert.

Durch Ausgestaltung eines Reaktordruckbehälters mit einer Schutzschicht, welche insbesondere im Inneren des Reaktordruckbehälters einen keramischen zur Hauptachse des Reaktordruckbehälters symmetrischen Gürtel bildet, wird in einem Störfall mit abschmelzenden Reaktorkern die Außenkühlung des Reaktordruckbehälters unabhängig von einer sich in dem Reaktordruckbehälter ausbildende Schicht aus geschmolzenem Metall. Der keramische Gürtel ist innerhalb des Reaktordruckbehälters in einem Bereich angeordnet, in dem sich die Metallschicht ausbilden wird. Je nach Reaktortyp, inbesondere für eine Leichtwasser-Kernkraftanlage (Siedewasser- oder Druckwasser-Kernkraftanlage) ist das zeitliche Auftreten der Metallschicht sowie deren zeitlich veränderbare Dicke in einem Störfall mit abschmelzenden Reaktorkern unterschiedlich. Die Metallschicht, welche sich durch Abschmelzen metallischer Teile des Reaktordruckbehälters bildet, hat eine Temperatur, die im Bereich der Schmelztemperatur von Stahl liegt und ist niedriger als die Schmelztemperatur der die Schutzschicht bildenden Keramik. Hierdurch wird das Eindringen von Metall sowie das Wegerodieren der Wand des Reaktordruckbehälters durch die Metallschicht verhindert. Die Wand des Reaktordruckbehälters wird somit durch die Metallschicht im wesentlichen nicht zusätzlich aufgeheizt, so daß die Außenkühlung des Reaktordruckbehälters mittels Notkühlmittels, wie Wasser, unabhängig von der Metallschicht sowie von der Art und der Leistungsgröße des Kernreaktors ist. Somit kann durch eine Außenkühlung des Reaktordruckbehälters trotz einer Schicht aus geschmolzenem Metall ein Versagen des Reaktordruckbehälters, insbesondere ein Durchschmelzen in der Höhe der metallischen Schicht, sicher vermieden werden. Durch eine infolge der Außenkühlung entstehenden Krustenbildung des keramischen abgeschmolzenen Reaktorkerns erfolgt für diesen ein Selbsteinschluß. Die metallische Schmelze wird durch die einen keramischen Gürtel bildende Schutzschicht ebenfalls wirksam eingeschlossen.

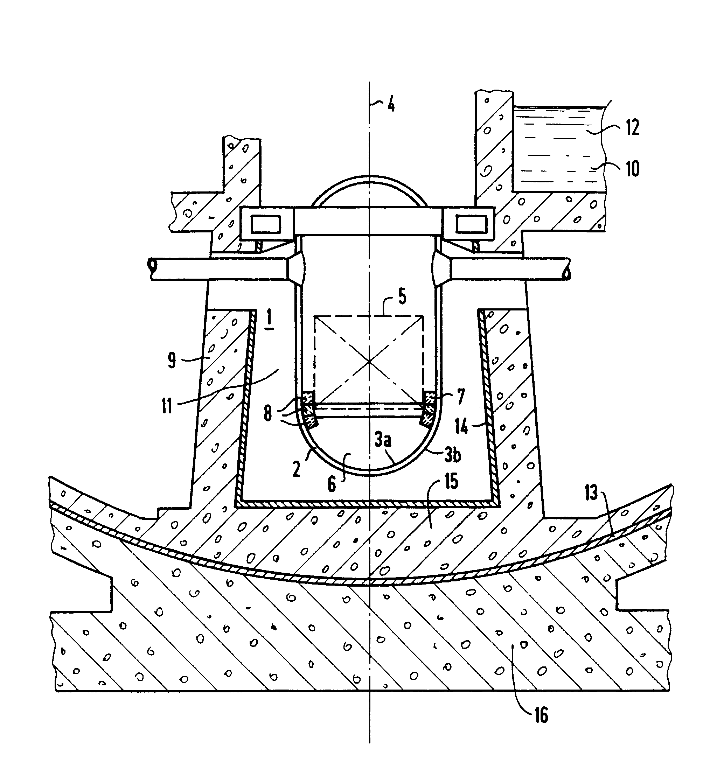

Anhand der Zeichnung wird ein Reaktordruckbehälter mit Schutzschicht näher erläutert. Die einzige Figur zeigt schematisch einen Reaktordruckbehälter einer Leichtwasser-Kernkraftanlage in einem Längsschnitt.

Der Reaktordruckbehälter 1 ist entlang einer Hauptachse 4 gerichtet und weist eine metallische Hülle 2 auf. Die metallische Hülle 2 hat eine Innenwandung 3a sowie eine Außenwandung 3b. Der Reaktordruckbehälter 1 ist in einer Tragstruktur 9 aus Beton gehaltert und von einem Sicherheitsbehälter 13 umschlossen. Die Tragstruktur 9 ruht auf einem Fundament 16 der Kernkraftanlage und bildet eine Reaktorkaverne 11, die mit einem metallischen Liner 14 ausgekleidet ist und in der der Reaktordruckbehälter 1 vollständig aufgenommen ist. Die Reaktorkaverne 11 kann einen sogenannten "Core-Catcher" zur Aufnahme eines abgeschmolzenen Reaktorkerns 5 aufweisen und/ oder mit einer separaten Kammer zur Aufnahme und Kühlung des abgeschmolzenen Reaktorkerns 5 verbunden sein. Der Reaktordruckbehälter 1 umschließt einen Reaktorkern 5, welcher nicht dargestellte Brennelemente zur Erzeugung thermische Energie durch nukleare Kettenreaktion aufweist. In dem geodätisch tiefstliegenden Bereich 6 des Reaktordruckbehälters 1, welcher in die Form einer Kugelkalotte übergeht, ist rotationssymetrisch zur Hauptachse 4 eine thermische Schutzschicht 7 in Form eines Gürtels an der Innenwandung 3a angeordnet. Die Schutzschicht 7 ist durch eine Mehrzahl von Elementen 8, insbesondere Keramiksteinen, gebildet. Diese Elemente 8 sind durch nichtdargestellte Halterungen lösbar mit der Innenwandung 3a verbunden. Innerhalb des Sicherheitsbehälters 13 ist ein Flutbecken 10 vorgesehen, welches mit Kühlfluid 12 gefüllt und geodätisch oberhalb des Reaktorkerns 5 angeordnet ist. Über nichtdargestellte Strömungskanäle gelangt bei einem Kühlmittelverlust Störfall, insbesondere bei abschmelzendem Reaktorkern, Kühlfluid 12 in die Reaktorgrube 11 bis zu einer solchen Höhe, daß der abgeschmolzene in dem Reaktordruckbehälter 1 zurückgehaltene Reaktorkern 5 von außen kühlbar ist. Es versteht sich, daß zur Kühlung der Außenwandung 3b auch ein Kühlsystem vorgesehen sein kann, welches von Kühlfluid 12 durchströmbare Kühlrohre umfaßt. Im Falle des Abschmelzens des Reaktorkerns 5 ist dieser bei einer Außenkühlng innerhalb des Reaktordruckbehälters 1 rückhaltbar. Die thermische Schutzschicht 7 ist an der Innenwandung 3a so angeordnet, daß sie bei einem Abschmelzen des Reaktorkerns 5 eine sich auf diesem ausbildende metallische Schmelze umschließt, welche somit von der metallischen Hülle 2 thermisch isoliert ist. Durch eine thermische Isolation der Hülle 2 gegenüber der als dünne Schicht auftretenden metallischen Schmelze ist ein Durchschmelzen in dem Bereich der metallischen Schmelze wirksam verhindert. Die metallische Schmelze kann durch ein Aufschmelzen, beispielsweise der metallischen Hüllrohre der Brennelemente oder anderer metallischer Einbauten des Reaktordruckbehälters 1 infolge der starken Hitzeentwicklung durch den abschmelzenden Reaktorkern 5 entstehen.

Die Erfindung zeichnet sich durch einen Reaktordruckbehälter aus, welcher eine metallische Hülle mit einer Innenwandung aufweist, wobei an der Innenwandung eine Schutzschicht angeordnet ist. Diese Schutzschicht verhindert bei einem Störfallszenario mit abschmelzendem Reaktorkern, daß eine sich auf dem abgeschmolzenen Reaktorkern ausbildende insbesondere dünne metallische Schmelze in direkten Kontakt mit der metallischen Hülle gelangt. Dies ist von besonderem Vorteil, da dieser metallischen Schmelze durch den abgeschmolzenen Reaktorkern mehr thermische Energie zuführbar als ihr durch Strahlung entziehbar ist. In der metallischen Schmelze wird die in dem abgeschmolzenen Reaktorkern erzeugte thermische Energie ggf. fokussiert, was bei direktem Kontakt der metallischen Hülle mit dieser Schmelze zu einer lokal gebündelten und überhöhten thermischen Belastung führen könnte. Diese ggf. extreme thermische Belastung wird durch die Schutzschicht, welche weitgehend thermisch isolierend ist, auf ein unkritisches Maß reduziert. Ein Versagen des Reaktordruckbehälters, d.h. ein Durchschmelzen im Bereich der metallischen Schmelze, ist somit insbesondere bei einer Außenkühlung wirksam verhindert. Zudem bewirkt die Schutzschicht eine Vergleichmäßigung des thermischen Flusses in der Hülle, so daß die Wärmeabfuhrvorgänge (Außenkühlung) in der Hülle von der metallischen Schmelze weitgehend entkoppelt sind. Durch eine Außenkühlung des Reaktordruckbehälters kann zudem an der Innenwandung eine Krustenbildung und damit ein Selbsteinschluß des abgeschmolzenen Reaktorkerns erreicht werden. Die erfindungsgemäße Ausgestaltung eines Reaktordruckbehälters mit einer an der Innenwandung angeordneten thermischen Schutzschicht ist besonders für eine Leichtwasser-Kernkraftanlage, wie eine Siedewasser- oder Druckwasserkernkraftanlage, beliebiger thermischer Leistung geeignet.

## Patentansprüche

1. Reaktorbehälter (1), welcher entlang einer Hauptachse (4) gerichtet ist und zur Aufnahme eines Reaktorkerns (5) eine metallische Hülle (2) mit einer Innenwandung (3a) und einer Außenwandung (3b) aufweist, dadurch gekenneichnet, daß eine Schutzschicht (7) zum Schutz der Hülle (2) gegen eine im Falle eines Abschmelzens des Reaktorkerns (5) erzeugbare metallische Schmelze vorgesehen ist, welche Schutzschicht (7) gürtelförmig an der Innenwandung (3a) angeordnet ist.

2. Reaktordruckbehälter (1) nach Anspruch 1, bei dem die Schutzschicht (7) demontierbar ist.

3. Reaktordruckbehälter (1) nach Anspruch 1 oder 2, bei dem die Schutzschicht (7) ein thermisch isolierendes hochschmelzendes Material, insbesondere eine Keramik, aufweist.

4. Reaktordruckbehälter (1) nach Anspruch 3, wobei das Material ein Metalloxid, wie Urandioxid oder Zirkondioxid, ist.

5. Reaktordruckbehälter (1) nach Anspruch 3 oder 4, wobei die Schutzschicht (7) eine gesinterte Keramik aufweist.

6. Reaktordruckbehälter (1) nach einem der vorhergehenden Ansprüche, bei dem die Schutzschicht (7) eine Mehrzahl von Elementen (8), insbesondere Keramiksteine oder Keramiksegmente, aufweist.

7. Reaktordruckbehälter (1) nach einem der vorhergehenden Ansprüche, welcher in einer Kernkraftanlage in einer Reaktorgrube (11) angeordnet ist und durch Flutung der Reaktorgrube (11) mit Kühlfluid (12) an der Außenwandung (3b) kühlbar ist.

## Claims

1. Reactor pressure vessel (1) which is directed along a main axis (4) and which has, for receiving a reactor core (5), a metallic cladding (2) with an inner wall (3a) and with an outer wall (3b), characterized in that a protective layer (7) is provided for protecting the cladding (2) against a metallic melt capable of being produced in the event of a melt-down of the reactor core (5), the said protective layer (7) being arranged in a girdle-like manner on the inner wall (3a).

2. Reactor pressure vessel (1) according to Claim 1, in which the protective layer (7) is removable.

3. Reactor pressure vessel (1) according to Claim 1 or 2, in which the protective layer (7) has a thermally insulating high-melting material, in particular a ceramic.

4. Reactor pressure vessel (1) according to Claim 3, the material being a metal oxide, such as uranium dioxide or zirconium dioxide.

5. Reactor pressure vessel (1) according to Claim 3 or 4, the protective layer (7) having a sintered ceramic.

6. Reactor pressure vessel (1) according to one of the preceding claims, in which the protective layer (7) has a plurality of elements (8), in particular ceramic bricks or ceramic segments.

7. Reactor pressure vessel (1) according to one of the preceding claims, which is arranged in a reactor pit (11) in a nuclear power plant and which can be cooled with cooling fluid (12) on the outer wall (3b) by flooding the reactor pit (11).

## Revendications

1. Cuve (1) de réacteur qui est agencée le long d'un axe principal (4) et comprend une enveloppe métallique (2) destinée à recevoir un coeur (5) de réacteur et pourvue d'une paroi interne (3a) et d'une paroi externe (3b), caractérisée en ce qu'on prévoit une couche de protection (7) pour protéger l'enveloppe (2) d'une masse métallique fondue pouvant être produite en cas de fusion du coeur (5) du réacteur, laquelle couche de protection (7) forme une ceinture sur la paroi interne (3a).

2. Cuve (1) de réacteur selon la revendication 1, dans laquelle la couche de protection (7) peut être démontée.

3. Cuve (1) de réacteur selon l'une des revendications 1 ou 2, dans laquelle la couche de protection (7) comprend un matériau thermiquement isolant à point de fusion élevé, notamment une céramique.

4. Cuve (1) de réacteur selon la revendication 3, dans laquelle le matériau est un oxyde métallique tel le dioxyde d'uranium ou le dioxyde de zirconium.

5. Cuve (1) de réacteur selon l'une des revendications 3 ou 4, la couche de protection (7) étant une céramique frittée.

6. Cuve (1) de réacteur selon l'une des revendications précédentes, dans laquelle la couche de protection (7) comprend une pluralité d'éléments (8), notamment des pierres de céramique ou des segments de céramique.

7. Cuve (1) de réacteur selon l'une des revendications précédentes, qui est située dans une fosse (11) de réacteur d'une centrale nucléaire et peut être refroidie, au niveau de la paroi externe (3b), par inondation de la fosse (11) de réacteur avec un fluide de refroidissement (12).
